## Europäisches Patentamt

## European Patent Office

## Office européen des brevets

(19)

(11) Veröffentlichungsnummer: **0 248 091**
**B1**

(12) **EUROPÄISCHE PATENTSCHRIFT**

(45) Veröffentlichungstag der Patentschrift:
**18.04.90**

(21) Anmeldenummer: **86100598.1**

(22) Anmeldetag: **17.01.86**

(51) Int. Cl.⁴: **A01F 12/44**

(54) **Verstellvorrichtung für Siebe.**

(43) Veröffentlichungstag der Anmeldung:
**09.12.87 Patentblatt 87/50**

(45) Bekanntmachung des Hinweises auf die Patenterteilung:
**18.04.90 Patentblatt 90/16**

(84) Benannte Vertragsstaaten:
**DE FR GB IT**

(56) Entgegenhaltungen:
**EP-A- 0 104 676**
**DE-A- 1 952 808**
**DE-A- 1 957 933**
**FR-A- 868 684**
**US-A- 1 327 325**
**US-A- 2 413 382**
**US-A- 3 472 378**

(73) Patentinhaber: **DEERE & COMPANY, 1 John Deere Road, Moline, Illinois 61265(US)**

(72) Erfinder: **Schuhmacher, Ernst, Donaustrasse 4, D-6650 Homburg-Einöd(DE)**

(74) Vertreter: **Feldmann, Bernhard et al, DEERE & COMPANY European Office, Patent Department Steubenstrasse 36-42 Postfach 503, D-6800 Mannheim 1(DE)**

ACTORUM AG

## Beschreibung

Die Erfindung bezieht sich auf eine Verstellvorrichtung für Lamellen mindestens eines an Schwingarmen schwenkbar aufgehängten Siebes von landwirtschaftlichen Maschinen, insbesondere Mähdreschern, wobei die Lamellen über eine quer zur Förderrichtung des Siebes verlaufende und an der Schwingbewegung des Siebes teilnehmende Stellwelle, die an mindestens einen in Förderrichtung des Siebes verschiebbaren und an Lamellenträger der Lamellen angreifenden Stellteil angeschlossen ist, nur bei Drehung der Stellwelle durch Verschwenkung eines Stellhebels in ihrem Öffnungswinkel verstellbar sind.

Eine derartige Verstellvorrichtung (DE-A 1 952 808) ist in ihrem Aufbau besonders einfach und damit kostengünstig herzustellen.

Sie eignet sich insbesondere zum bequemen Verstellen von breitflächigen Lamellensieben in Mähdreschern. Da aber bei dieser Verstellvorrichtung der Stellhebel mit der Stellwelle fest verbunden ist, nimmt er an der Schwingbewegung des Siebes teil und kann somit nicht bei schwingenden Sieben, sondern nur bei stillstehenden Sieben bzw. bei abgeschalteter Reinigungsvorrichtung zum Verstellen der Lamellen oder Sieböffnungen betätigt werden.

Die Sieböffnungen auch bei hin- und herschwingenden Sieben, d. h. im Einsatz, zu verstellen, ist ebenfalls nicht mehr neu (DE-A 3 472 378). Im einzelnen ist bei dieser bekannten Verstellvorrichtung ein Winkelhebel am Ende des Siebkastens auf einem vertikal verlaufenden Bolzen verschwenkbar angeordnet, mit seinem einen Schenkel über weitere Gestänge mit den Lamellenträgern der Lamellen schwenkbar verbunden und mit seinem anderen Schenkel an eine quer zur Förderrichtung des Siebes angeordnete längenveränderliche Stange angeschlossen, deren anderes Ende an einem an der Maschinenaußenseite auf einem ortsfesten Bolzen horizontal verschwenkbaren Stellhebel angreift. Der Stellhebel wird in einem kreissegmentartigen Rasterteil derart festgesetzt, daß die längenveränderliche Stange den Bewegungen des Lamellensiebes folgen kann.

Die mit der Erfindung zu lösende Aufgabe wird darin gesehen, die gattungsmäßig berücksichtigte Verstellvorrichtung so weiterzubilden, daß eine genaue Verstellung der Lamellen bei hin- und herschwingenden Sieben mit einfachen Mitteln möglich ist. Diese Aufgabe ist dadurch gelöst worden, daß der Stellhebel an der Maschine ortsfest gelagert und über ein Vertikalgestänge an eine Lasche schwenkbar angeschlossen ist, die sich in Förderrichtung des Siebes erstreckt und mit der Stellwelle fest verbunden ist, wobei Stellhebel, Lasche, Vertikalgestänge und ein Schwingarm eine parallelogrammartige Gestängeanordnung bilden, die bei der Schwingbewegung des Siebes keinen Einfluß auf die Lage der Lamellen ausübt.

Auf diese Weise nimmt der Stellhebel an der Schwingbewegung der Siebe nicht teil, und solange die Lage des Stellhebels nicht verändert wird, findet auch keine Stellwellendrehung statt, die zum Verstellen der Sieblamellen erforderlich ist. Im ganzen gesehen können somit die Siebe im Stillstand und auch im Betrieb leicht und ohne großen Kraftaufwand über ein einfaches Gestänge durch Betätigung des Stellhebels verstellt werden. Über den Stellhebel kann darüber hinaus die Siebstellung erkannt werden.

Zweckmäßig kann der Stellhebel mittels verschiedener am Mähdrescher vorgesehener Rastelemente feststellbar sein.

Damit die Siebverstellung auch von der Fahrerplattform aus durchgeführt werden kann, wird ferner noch nach der Erfindung vorgeschlagen, daß der Stellhebel über einen hydraulischen oder einen elektrischen Verstellmotor bewegbar ist, wobei ein Servostellglied für den Verstellmotor vom Fahrerstand aus zu betätigen ist.

Wenn ferner noch das Servostellglied von einem Prozessrechner in Abhängigkeit von der Getreideart und von den Verlusten einstellbar ist, wird erreicht, daß die Siebverstellung in eine Durchsatz-Verlust-Regelung integrierbar ist.

Im folgenden wird die Erfindung anhand von lediglich einen Ausführungsweg darstellenden Zeichnungen näher erläutert. Es zeigt:

Fig. 1 eine schematische Darstellung eines Mähdreschers mit der Dresch- und Trennvorrichtung sowie den zugehörigen Sieben der Reinigungsvorrichtung,

Fig. 2 eine perspektivische Darstellung eines Teils eines Lamellen aufweisenden Siebes

Fig. 3 eine Teilansicht der Stellvorrichtung in der Ansicht 3–3 gemäß Fig. 2,

Fig. 4 einen Stellhebel mit einem Vertikalgestänge, das eine über eine Lasche an eine Stellwelle zur Verstellung der einzelnen Lamellen angeschlossen ist,

Fig. 5 das rechte Ende der Stellwelle in Draufsicht,

Fig. 6 einen Stellteil zur Verstellung der einzelnen Lamellenträger und

Fig. 7 den Anschluß des Stellteiles an die Stellwelle.

In der Zeichnung ist mit 10 ein Mähdrescher bezeichnet, der mit zwei vorderen Laufrädern 12 und zwei hinteren, steuerbaren Laufrädern 14 ausgerüstet ist. An der Stirnseite des Mähdreschers 10 befindet sich eine eine Schneidwerksplattform aufweisende Erntebergungsvorrichtung 18, über die das Erntegut aufgenommen wird und einer im Mähdrescher vorgesehenen Dresch- und Trennvorrichtung 20 zugeführt wird. Unterhalb der Dresch- und Trennvorrichtung 20 befindet sich eine Reinigungsvorrichtung 22, zu der ein Zuführboden 24, ein Gebläse 26 und mehrere untereinander angeordnete Siebe 28 gehören.

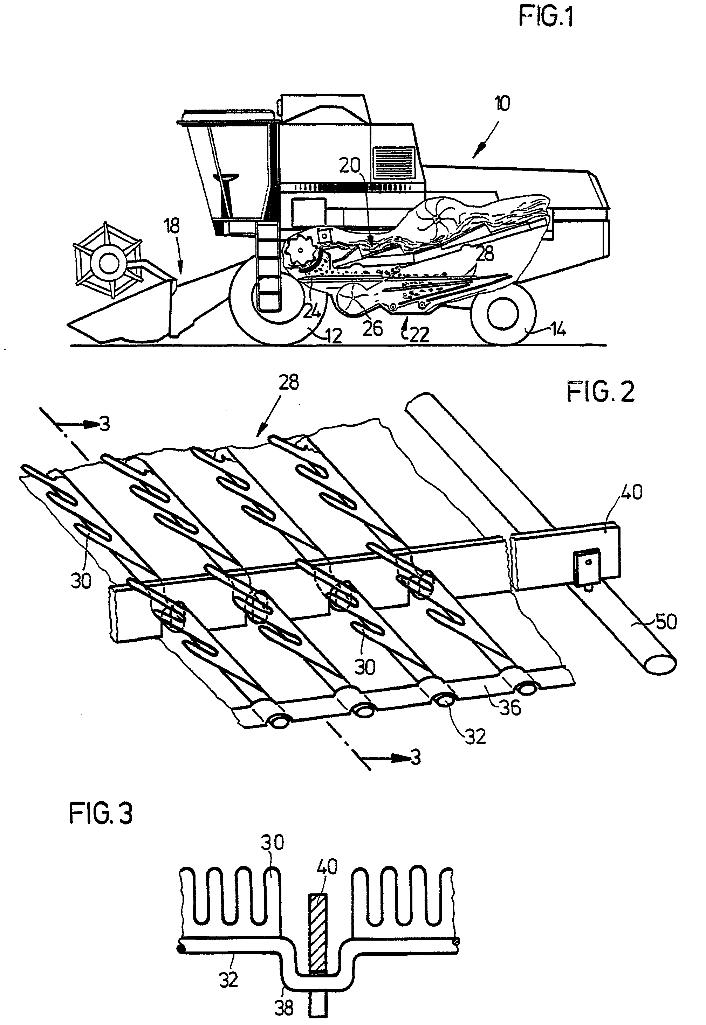

In Fig. 2 ist ein Sieb 28 eines nicht weiter dargestellten Siebkastens teilweise dargestellt das zahlreiche hintereinander angeordnete Lamellen 30 aufweist, die in Gruppen auf Lamellenträgern 32 befestigt sind. Die Lamellenträger 32 sind endseitig je auf einem nichtdargestellten Rahmentäger 3 drehbar gelagert, der Teil eines ebenfalls in der Zeichnung nicht dargestellten Siebrahmens ist. Die einzelnen Lamellenträger sind mittels eines Stahlbandes 36, das zahlreiche Ausbuchtungen aufweist, auf dem Rahmenträger gesichert.

Wie insbesondere aus Fig. 3 hervorgeht, ist im mittleren Bereich des Siebes jeder der Lamellenträger 32 mit einer Kurbel 38 ausgerüstet, so daß durch Verstellung der Kurbel 38 die Lage der einzelnen Lamellen 30 verändert werden kann. Die einzelnen Kurbeln 38 der Lamellenträger 32 liegen in etwa auf der Längsmittelebene des Siebes 28 hintereinander.

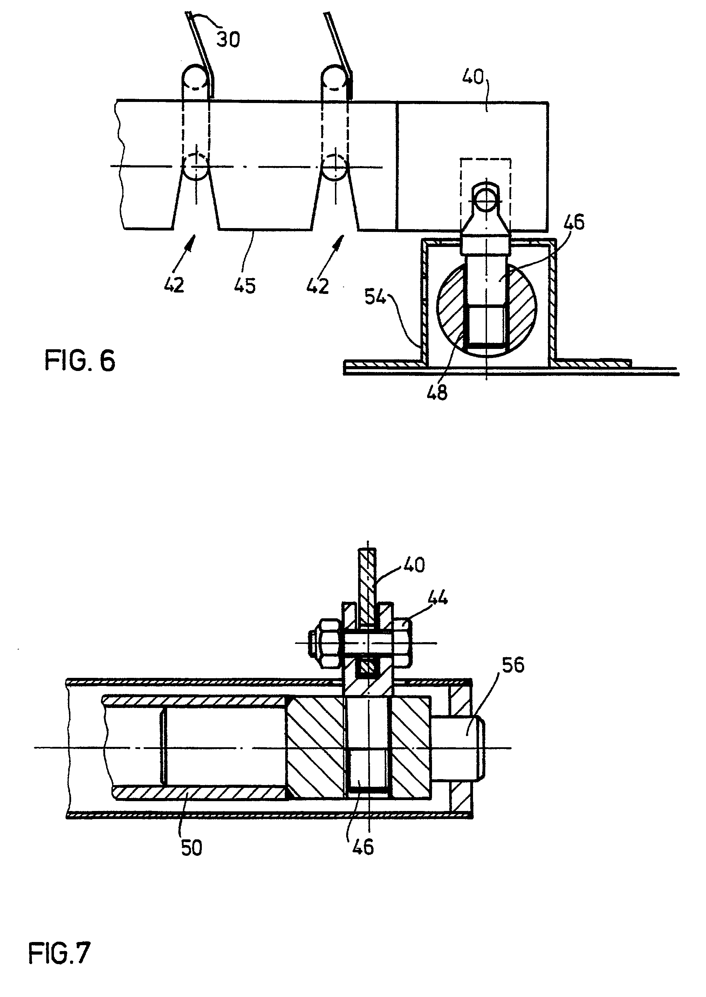

Wie aus Fig. 6 hervorgeht, werden die Kurbeln 38 über einen Stellteil 40 verstellt, der aus einem im Querschnitt rechteckförmigen länglichen Blechstreifen besteht, der an seiner Unterseite zahlreiche Einschnitte 42 aufweist, so daß der Stellteil 40 von oben her auf die einzelnen Kurbeln der Lamellenträger 32 aufgeschoben werden kann. Die einzelnen Einschnitte 42 können sich zur unteren Stirnkante 45 des Stellteiles 40 erweitern. Der Stellteil 40 ist, wie aus Fig. 2 hervorgeht, auf der Längsmittelachse des Siebes 28 zwischen jeweils zwei benachbarten Lamellen 30 angeordnet. Das sich über das Sieb 28 hinaus erstreckende Ende des Stellteiles 40 ist über einen Schraubenbolzen 44 mit einer Augenschraube 46 (Fig. 7) gelenkig verbunden. Das untere Ende der Augenschraube 46 ist in eine Bohrung 48 eingeschraubt, die in einer hinter dem Sieb angeordneten Stellwelle 50 aufgenommen ist. Die Stellwelle 50 lagert endseitig jeweils in in der außenliegenden Seitenwand 51 des Siebkastens vorgesehenen Buchsen 52. Die Seitenwände 51 des Siebkastens liegen innerhalb von Seitenwänden 53 des Mähdreschers 10. Die Stellwelle 50 erstreckt sich durch eine in der Seitenwand 53 des Mähdreschers 10 vorgesehene Langlochöffnung 55, so daß die Stellwelle 50 der Bewegung des Siebkastens ungehindert folgen kann. Wie aus Fig. 6 hervorgeht, kann die Stellwelle 50 über ein Hutprofil 54 abgedeckt sein. Das Hutprofil 54 ist das Verbindungsteil für die beiden Seitenwände 51. Das Hutprofil 54 liegt hinter dem Sieb 28 des Siebkastens. Die Stellwelle 50 folgt synchron der Bewegung des Siebes 28. Beispielsweise das rechte Ende 56 der Stellwelle 50 weist eine Lasche 58 auf, die mit dem Ende 56 der Stellwelle 50 fest verbunden, beispielsweise verschweißt, ist. Am äußeren Ende der Lasche 58 befindet sich eine Bohrung 60 zur Aufnahme eines Schraubenbolzens 62, der ein Vertikalgestänge 64 mit der Lasche 58 gelenkig verbindet. Die Lasche 58 sowie das Vertikalgestänge 64 erstrecken sich beispielsweise an der Seitenwand 3 des Mähdreschers entlang. Das Vertikalgestänge 64 ist an einen Stellhebel 66 über einen Schraubenbolzen 68 gelenkig angeschlossen. Damit der Stellhebel 66 in verschiedenen Positionen im Bereich des Schraubenbolzens 68, nicht dargestellte Rastelemente vorgesehen.

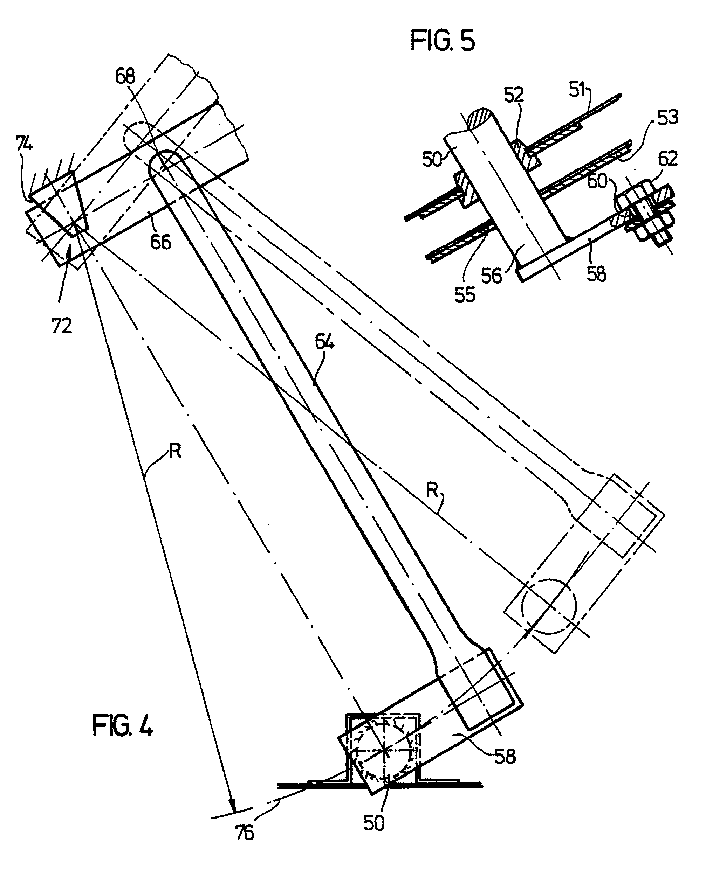

Der Stellhebel 66 ist mittels eines Gelenkbolzens 72 von einem Lager 74 aufgenommen, das an der Außenseite der Seitenwand 53 des Mähdreschers 10 vorgesehen ist. Der Gelenkbolzen 72 liegt auf dem Kreismittelpunkt des Kreisbogens 76, der durch den Radius R angegeben ist. Der Kreisbogen 76, der in Fig. 4 in gestrichelten Linien angedeutet ist, stellt die Bewegungsbahn der Stellwelle 50 um den Gelenkbolzen 72 dar, wenn das Sieb 28 über in der Zeichnung nicht dargestellte Schwingen angetrieben wird.

Da der Stellhebel 66, das Vertikalgestänge 64 sowie die Lasche 58 eine parallelogrammartige Gestängeanordnung bilden, wird bei einer Schwingbewegung des Siebes 28 und somit der Schwenkbewegung der Stellwelle 50 auf dem Kreisbogen 76 auch gleichzeitig diese Gestängeanordnung mit verschwenkt.

Dabei übt der Stellhebel 66 keinen Einfluß auf die Stellwelle 50 aus, so daß bei einem derartigen Schwenkvorgang des Siebes 28 die Lage der Lamellen 30 nicht beeinflußt wird. Erst durch zusätzliche Verschwendung des Stellhebels 66 nach Lösen aus seinem entsprechenden Rastelement wird die Stellwelle 50 etwas gedreht und somit die Lage aller Lamellen 30 entsprechend verändert. Eine derartige Verstellung der einzelnen Lamellen 30 läßt sich bei Stillstand sowie bei der Schwingbewegung des Siebes 28 vornehmen.

Eine derartige Verstellvorrichtung bietet also auf einfache Weise die Möglichkeit, während des Arbeitseinsatzes des Mähdreschers und somit der zugehörigen Siebe 28 eine Verstellung der Lamellen vorzunehmen.

**Patentansprüche**

1. Verstellvorrichtung für Lamellen (30) mindestens an Schwingarmen schwenkbar aufgehängten Siebes (28) von landwirtschaftlichen Maschinen, insbesondere Mähdreschern, wobei die Lamellen (30) über eine quer zur Förderrichtung des Siebes (28) verlaufende und an der Schwingbewegung des Siebes (28) teilnehmende Stellwelle (50), die an mindestens einen in Förderrichtung des Siebes (28) verschiebbaren und an Lamellenträgern (32) der Lamellen (30) angreifenden Stellteil (40) angeschlossen ist, nur bei Drehung der Stellwelle (50) durch Verschwenkung eines Stellhebels (66) in ihrem Öffnungswinkel verstellbar sind, dadurch gekennzeichnet, daß der Stellhebel (66) an der Maschine ortsfest gelagert und über ein Vertikalgestänge (64) an eine Lasche (58) schwenkbar angeschlossen ist, die sich in Förderrichtung des Siebes (28) erstreckt und mit der Stellwelle (50) fest verbunden ist, wobei Stellhebel (66), Lasche (58), Vertikalgestänge (64) und ein Schwingarm eine parallelogrammartige Gestängeanordnung bilden, die bei der Schwingbewegung des Siebes (28) keinen Einfluß auf die Lage der Lamellen (30) ausübt.

2. Vorrichtung nach Anspruch 1, dadurch gekennzeichnet, daß der Stellhebel (66) mittels verschiedener am Mähdrescher (10) vorgesehener Rastelemente feststellbar ist.

3. Vorrichtung nach Anspruch 1 oder 2, dadurch gekennzeichnet, daß der Stellhebel (66) über einen hydraulischen oder einen elektrischen Verstellmotor bewegbar ist.

4. Vorrichtung nach Anspruch 3, dadurch gekennzeichnet, daß ein Servostellglied für den Verstellmotor vom Fahrerstand aus zu betätigen ist.

5. Vorrichtung nach einem oder mehreren der vorherigen Ansprüche, dadurch gekennzeichnet, daß das Servostellglied von einem Prozessrechner in Abhängigkeit von der Getreideart und von den Verlusten einstellbar ist.

## Claims

1. Adjusting device for lamellae (30) of at least one sieve (28) suspended to oscillate on swinging arms, of agricultural machines, especially combine harvesters, wherein the lamellae (3) are adjustable their opening angle through a regulating shaft (50) running transverse to the conveying direction of the sieve (28) and participating in the oscillating movement of the sieve (28), which shaft is connected to at least one regulating part (40) displaceable in the conveying direction of the sieve (28) and engaging with lamella carriers (32) of the lamellae (30), solely by rotation of the regulating shaft (50) by swinging a regulating lever (66), characterized in that the regulating lever (66) is mounted in a fixed position on the machine and is pivotally connected by a vertical rod (64) to a tongue (58), which extends in the conveying direction of the sieve (28) and is fixedly connected to the regulating shaft (50), wherein the regulating lever (66), tongue (58), vertical rod (64) and one swinging arm form a parallelogram-like linkage arrangement, which exerts no action on the position of the lamellae (30) through the oscillating movement of the sieve (28).

2. Device according to claim 1, characterized in that the regulating lever (66) can be arrested by means of various detent elements provided on the combine harvester (10).

3. Device according to claim 1 or 2, characterized in that the regulating lever (66) is movable by a hydraulic or an electrical adjusting motor.

4. Device according to claim 3, characterized in that a servo control member for the adjusting motor is operable from the driver position.

5. Device according to one or more of the preceding claims, characterized in that the servo control member is adjustable by a processor in dependence on the kind of grain and on the losses.

## Revendications

1. Dispositif de déplacement pour des lamelles (30) d'au moins un tamis (28), suspendu de façon à pouvoir pivoter à des bras oscillants, de machines agricoles, en particulier de moissonneuses-batteuses, les lamelles (30) pouvant, par l'intermédiaire d'un arbre de déplacement (50) s'étendant transversalement à la direction de transport du tamis (28) et participant au mouvement oscillant du tamis (28), qui est raccordé à au moins un élément de déplacement (40) pouvant être déplacé dans la direction de transport du tamis (28) et appliqué à des supports de lamelles (32) des lamelles (30), seulement lors de la rotation de l'arbre de déplacement (50) par pivotement d'un levier de déplacement (66), avoir leur angle d'ouverture modifié, caractérisé en ce que le levier de déplacement (66) est placé fixement sur la machine et est raccordé de façon à pouvoir pivoter par l'intermédiaire d'une tringle verticale (64) à une biellette (58) qui s'étend dans la direction de transport du tamis (28) et est reliée rigidement à l'arbre de déplacement (50), le levier de déplacement (66), la biellette (58), la tringle verticale (64) et un bras oscillant formant une tringlerie du type parallélogramme qui n'exerce pas d'influence sur la position des lamelles (30) lors du mouvement d'oscillation du tamis (28).

2. Dispositif suivant la revendication 1, caractérisé en ce que le levier de déplacement (66) peut être immobilisé au moyen de divers éléments de crantage prévus sur la moissonneuse-batteuse (10).

3. Dispositif suivant la revendication 1 ou 2, caractérisé en ce que le levier de déplacement (66) peut être déplacé au moyen d'un moteur de déplacement hydraulique ou d'un moteur de déplacement électrique.

4. Dispositif suivant la revendication 3, caractérisé en ce qu'un organe de servocommande de déplacement pour le moteur de déplacement doit être actionné à partir du poste de conduite.

5. Dispositif suivant une ou plusieurs des revendications précédentes, caractérisé en ce que l'organe de servocommande de déplacement est réglable par un calculateur de processus en fonction du type de céréales et des pertes.

FIG.1

FIG. 2

FIG.3

FIG. 5

FIG. 4

FIG. 6

FIG.7